# FASCICULE DE BREVET EUROPEEN

(11) **EP 1 388 983 B1**
(45) Date de publication et mention de la délivrance du brevet: **07.09.2005**
(21) Numéro de dépôt: 03291539.9
(22) Date de dépôt: 24.06.2003
(51) Int. Cl.: H04L 12/56, H04L 29/06

(54) **Gestion différenciée du trafic non-UMTS au sein d'un réseau d'accès UMTS**
Differenzierte Behandlung von Nicht-UMTS-Verkehr innerhalb eines UMTS-Zugangsnetzes
Differentiated management of non-UMTS traffic within an UMTS access network

(30) Priorité: 08.08.2002 FR 0210082
(43) Date de publication de la demande: 11.02.2004
(73) Titulaire: ALCATEL, 75008 Paris (FR)
(72) Inventeur: Pham, Tan-Nhon, 92160 Antony (FR); Preguica, Christophe, 91300 Massy (FR)
(74) Mandataire: Chaffraix, Sylvain

(56) Documents cités:
- WO-A-00/13436
- US-A- 5 841 769

## Description

La présente invention est relative aux infrastructures des réseaux mobiles notamment de troisième génération, communément appelés UMTS (*Universal Mobile Telecommunication System*).

Plus précisément, elle concerne un routeur, notamment un routeur d'accès, appartenant à un tel réseau et à un terminal connecté à ce réseau.

Les terminaux mobiles de troisième génération nécessitent d'une part une capacité de transmission importante pour pouvoir véhiculer des données multimédia telles que des images, de la vidéo, etc., et d'autre part la mise en place de contraintes de qualité de service telles que la garantie d'un débit minimum, d'un délai de transmission de bout en bout, d'un taux de perte, ou bien d'une gigue entre deux paquets de données consécutifs ne dépassant pas un seuil donné.

A ce sujet, le document WO 00/13436 révèle une procédé et un système pour réaliser la qualité de service dans un réseau sans fils.

Par ailleurs, les spécifications du système UMTS précisent que le réseau d'accès devant véhiculer le trafic devrait être conforme au protocole IP (*Internet Protocol*). Plus précisément, à partir de la version 5 des spécifications UMTS, le protocole doit être lPv6 (*Internet Protocol, version 6*).

Ce réseau est communément appelé UTRAN pour « *UMTS Terrestrial Radio Access Network* », en anglais.

Par ailleurs, il peut être prévu que le réseau puisse véhiculer de surcroît, du trafic des abonnés « non UMTS », c'est-à-dire avec ou sans spécification d'une qualité de service. Le réseau se comporte alors comme un fournisseur de service de transmission de données vis-à-vis d'autres réseaux.

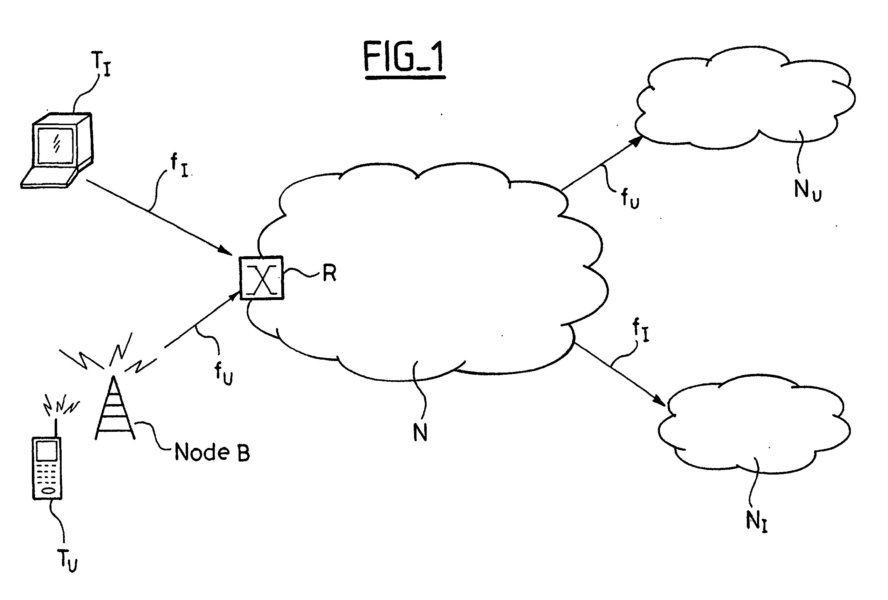

La figure 1 illustre cette situation.

La référence Tᵤ symbolise un terminal UMTS qui, via une station de base Node B, peut communiquer avec un routeur R et transmettre ainsi des données dans le réseau N. Les données ainsi transmises forment un flux multimédia fᵤ. Ce flux multimédia fᵤ est véhiculé par le réseau N, avant d'être transmis à un coeur de réseau UMTS Nᵤ. Ces données multimédia sont typiquement de la voix, des images ou de la vidéo (mais aussi éventuellement, des données), et comme évoqué précédemment, elles sont associées à de fortes contraintes de qualité de service.

Par ailleurs, un terminal Tᵢ, par exemple un micro-ordinateur, peut communiquer avec ce même routeur R et transmettre ses données dans le réseau N. Ces données forment un flux de données fₗ qui est véhiculé par le réseau N et transmis jusqu'au réseau Nᵢ.

Dans cet exemple, il apparaît donc que deux types de trafic sont véhiculés par le réseau N : un trafic composé de flux multimédia (dit « trafic multimédia ») et un trafic composé de flux de données non nécessairement multimédia (dit « trafic de données »). Plus généralement, un réseau N peut véhiculer un type de trafic UMTS (ici le trafic multimédia) et un type de trafic non-UMTS (ici, le trafic de données).

Ce partage des ressources du réseau N pour deux trafics peut poser un problème car dès lors que le trafic de données devient suffisamment important, il peut pénaliser le trafic multimédia et, de ce fait, mettre en danger le respect des critères de qualité de service.

La présente invention a pour but de résoudre ce problème

Pour ce faire, elle a pour premier objet un terminal de télécommunication possédant des moyens pour transmettre un flux de paquets de données à un routeur d'accès à un réseau de télécommunication. Ce terminal se caractérise en ce qu'il dispose d'un moyen pour insérer une information de client au sein de ce flux, indiquant si le flux correspond à une norme de téléphonie mobile.

Selon une mise en oeuvre de l'invention, la norme de téléphonie mobile est une norme de téléphonie mobile telle la norme UMTS (*Universal Mobile Telecommunication System*). Toutefois, l'invention est susceptible à toute autre norme de téléphonie mobile de troisième génération ou de génération « 2,5 » telle le système GPRS (*General Packet Radio Service*).

Notamment, elle peut s'appliquer aux systèmes NE 2000 ou i-mode, tel que spécifié par la société japonaise NTT.

L'information de client est préférentiellement insérée dans un entête des paquets. Ce peut notamment être l'entête d'option hop-by-hop.

L'invention a pour second objet un routeur, notamment un routeur d'accès, appartenant à un réseau de télécommunication, possédant des moyens pour recevoir des flux de paquets de données. Selon l'invention, le routeur se caractérise en ce qu'il dispose
- de moyens pour déterminer si le flux correspond à une norme de téléphonie mobile, à partir d'une information de client insérée au sein du flux, et,
- des moyens pour mettre en oeuvre des mécanismes d'assurance de qualité de service, en fonction de cette détermination.

Selon une mise en oeuvre de l'invention, les mécanismes d'assurance de qualité de service dépendent d'autres informations sur le client, contenues dans le flux.

Selon une mise en oeuvre de l'invention, le routeur peut de surcroît disposer de moyens pour notifier un serveur de facturation, en indiquant si le flux correspond à une norme de téléphonie mobile.

L'invention et ses avantages apparaîtront de façon plus claire dans la description qui va suivre, en liaison avec les figures annexées.
La figure 1, déjà commentée, illustre le contexte dans lequel s'inscrit l'invention.
La figure 2 illustre le format d'un paquet de données selon le protocole lPv6.
La figure 3 schématise la constitution d'un entête « Hop by Hop » conforme à l'invention.

Selon l'invention, un terminal de télécommunication peut être un terminal mobile conforme à une norme de téléphonie mobile telle la norme UMTS, ou un terminal, mobile ou non, permettant de transmettre du trafic de données. Ce dernier terminal peut par exemple être un micro-ordinateur (fixe ou portable) ou un assistant numérique personnel (ou PDA pour *Personal Digital Assistant*).

Ces terminaux de télécommunication disposent de moyens pour transmettre des flux de paquets de données via un routeur d'accès, à un réseau de télécommunication. Ces moyens peuvent être des interfaces de radiocommunication ou bien des connexions filaires.

Selon l'invention, les terminaux de télécommunication disposent en outre de moyens pour insérer dans ces flux de paquets de données, une information de client indiquant si ces flux correspondent ou non à une norme de téléphonie mobile, notamment à la norme UMTS qui sera prise comme exemple dans la suite.

Ainsi, si le terminal est un terminal UMTS, il insère une information de client indiquant que les flux sont des flux UMTS.

Inversement, si le terminal n'est pas un terminal UMTS (mais un micro-ordinateur, par exemple), il insère une information de client indiquant que les flux ne sont pas des flux UMTS.

Cette information de client peut être insérée au sein même des paquets appartenant aux flux de paquets de données. Préférentiellement, elle est insérée dans un entête des paquets.

Typiquement, dans le cadre d'un système UMTS, le réseau de télécommunication est conforme au protocole lPv6 (*Internet Protocol version 6*). Le protocole lPv6 est défini par le RFC (*Request For Comments*) 2460 de l'IETF (*Internet Engineering Task Force*), publié en décembre 1998.

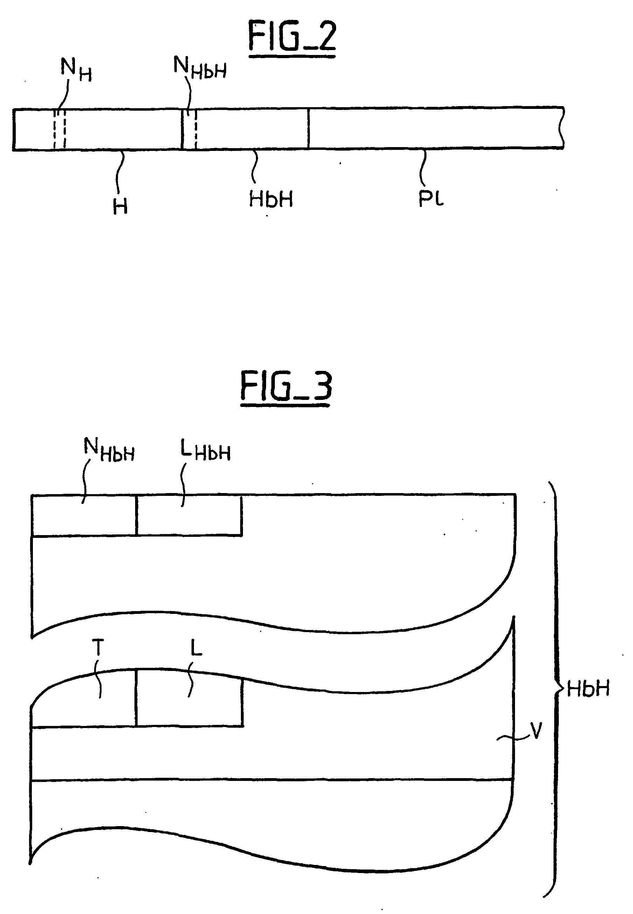

La figure 2 illustre le format d'un paquet de données selon ce protocole lPv6. Selon les spécifications du protocole lPv6, un paquet de données est constitué d'une succession d'entêtés et d'un corps de message.

Le corps de message peut être conforme à des protocoles de niveau immédiatement supérieur comme TCP (*Transport Control Protocol*) ou UDP (*User Datagram Protocol*).

La succession d'entêtés comporte au minimum un entête lPv6 (lPv6 header) H. Cet entête H apparaît nécessairement en premier et comporte des informations nécessaires au routage du paquet au sein du réseau.

D'autres entêtes peuvent optionnellement être présents entre l'entête lPv6 H et le corps de message PL (pour *Payload*, en anglais), encore appelé « charge utile ». Parmi ceux-ci, on peut citer les entêtes « hop-by-hop », de routage, de fragment, d'options de destination ou d'authentification.

L'enchaînement des entêtes est géré par la valeur du champ « Next Header » présent dans chaque entête.

Dans l'exemple de la figure 2, seul un entête optionnel « hop-by-hop » HbH est représenté. Sa présence est indiquée par une valeur nulle du champ N_{H} « Next header » de l'entête lPv6, H. De même cet entête HbH comporte un champ N_{HbH} indiquant qu'après cet entête HbH, on trouve la charge utile PL (et non un autre entête optionnel).

La caractéristique de l'entête « Hop-by-hop » est d'être obligatoirement lu et analysé par tous les routeurs (ou autres éléments de réseau) véhiculant le paquet.

Cet entête se compose d'un ensemble (éventuellement réduit à un singleton) de champs optionnels. Chaque champ optionnel est de type dit « TLV » pour *Type-Length-Value,* en langue anglaise, c'est-à-dire qu'il est composé de 3 sous-champs :
- Le premier indique le type de l'option,
- Le deuxième indique la longueur du sous-champ suivant.
- Le troisième indique une valeur correspondant à ce type.

Selon une mise en oeuvre de l'invention, l'information de client est insérée comme une option au sein de l'entête hop-by-hop.

La figure 3 illustre cette mise en oeuvre, en représentant les différents champs constitutifs de l'entête HbH. Cet entête comporte d'abord les champs N_{HbH} précédemment décrit, et le champ L_{HbH} donnant la taille totale de l'entête HbH.

Il comporte, en sus, une ou plusieurs option(s). Ici, une seule a été représentée, celle qui contient l'information de client. Cette option contient tout d'abord un sous champ T. La valeur de ce sous-champ est caractéristique du type d'information contenu par l'option. Typiquement, cette valeur doit être une valeur attribuée par l'IANA (*Internet Assigned Number Authority*).

Le sous-champ V indique la valeur, et le sous-champ L la longueur du sous-champ V.

Par exemple, le sous champ V peut occuper 6 octets ; auquel cas, la valeur du sous champ L vaut 6 et la longueur totale de l'option vaut 8 octets.

La valeur du sous champs V indique l'information de client, c'est-à-dire, en premier lieu, si le flux correspondant au paquet le contenant est un flux UMTS ou non.

Elle peut aussi indiquer d'autres informations sur le client. Par exemple, elle peut indiquer une qualité de service demandée par le client : « gold » (or), « silver » (argent), « bronze »....

Ainsi, tous les routeurs recevant un tel paquet doivent lire l'entête « hop by hop » et, ce faisant, déterminer si le flux dont fait partie le paquet correspond à une norme de téléphonie mobile. Selon un mode de réalisation de l'invention, ils peuvent de surcroît avoir des informations plus précises sur le client.

Ils peuvent alors mettre en oeuvre des mécanismes d'assurance de qualité de service, en fonction de cette détermination.

Typiquement, la charge de la mise en oeuvre de tels mécanismes peut ne revenir qu'au routeur d'accès R.

Il pourra par exemple mettre en oeuvre la technologie DiffServ, telle que spécifiée dans le RFC 2474 de l'IETF. Auquel cas, il peut simplement faire correspondre une couleur différente à chacune des valeurs de l'information de client (i.e. la valeur du sous champ V).

Ainsi, chaque routeur ultérieur transmettant le paquet et mettant en oeuvre la technologie DiffServ véhiculera de façon différenciée les paquets UMTS et les paquets non-UMTS. Du point de vue du réseau, il devient alors possible de traiter en priorité les paquets UMTS de sorte que les contraintes de qualité de service soient respectées.

Selon un mode de réalisation de l'invention, il est possible de véhiculer les flux de façon différenciée, en fonction d'autres informations sur le client.

En reprenant l'exemple évoqué précédemment, les flux demandant une qualité de service « gold » pourront être traités de façon plus prioritaire que les flux ne demandant qu'une qualité de service « silver » ou « bronze ».

Une mise en oeuvre alternative consiste à utiliser une technologie de type RSVP (Resource ReSerVation Protocol) telle que spécifiée dans le RFC 2205 de l'IETF.

Dans cette mise en oeuvre, le routeur d'accès R crée un paquet de signalisation qui est transmis dans le réseau N et permet la réservation de ressources au sein de ce réseau, afin de garantir le respect de la qualité de service spécifiée dans ce paquet de signalisation.

La qualité de service est alors déterminée par le routeur d'accès en fonction de l'information de client qui indique si le flux est un flux UMTS.

Par exemple, si le paquet n'appartient pas à un flux UMTS, aucun paquet de signalisation n'est envoyé ; par contre, si le paquet appartient à un flux UMTS, un paquet de signalisation est envoyé, demandant une qualité de service
- Soit en fonction du client, c'est-à-dire en fonction de précisions contenues dans cette information de client, comme indiquée précédemment,
- Soit correspondant à une qualité de service moyenne.

Dans la mesure où le réseau N (réseau d'accès UMTS) se comporte comme un fournisseur de service vis-à-vis du trafic non-UMTS, il peut être envisagé d'avoir des politiques de facturation différentes en fonction du type de trafic : les fournisseurs d'accès à Internet peuvent utiliser le réseau d'accès UMTS mais aussi des abonnés finaux qui veulent juste un accès à Internet, sans UMTS. Il paraît alors clair que ces abonnés doivent être facturés à un tarif moins élevé que les utilisateurs du système UMTS. Il convient donc, du point de vue du réseau, de pouvoir les distinguer.

L'invention permet de réaliser cette distinction. Le routeur d'accès, par exemple, est alors en mesure de notifier un serveur de facturation, en indiquant si le flux considéré correspond à une norme de téléphonie mobile ou non.

De surcroît, selon une mise en oeuvre de l'invention, l'information de client permet de véhiculer des informations plus précises sur le client. Il devient alors possible d'adapter plus finement la politique de facturation au client et notamment à la qualité de service demandée par le client (*gold, silver, bronze...*).

Le routeur d'accès peut également utiliser les informations dont il dispose sur le client pour fournir d'autres services tels que la gestion de trafic, la configuration dynamique du réseau, etc.

## Revendications

1. Terminal de télécommunication (Tᵤ) possédant des moyens pour transmettre un flux de paquets de données (fᵤ) à un routeur d'accès (R) à un réseau de télécommunication (N), **caractérisé en ce qu'**il dispose d'un moyen pour insérer une information de client au sein dudit flux, indiquant si ledit flux correspond à une norme de téléphonie mobile.

2. Terminal de télécommunication selon la revendication précédente, dans lequel ladite norme est la norme UMTS (*Universal Mobile Telecommunication System*).

3. Terminal de télécommunication selon l'une des revendications 1 ou 2, dans lequel ladite information de client est insérée dans un entête desdits paquets.

4. Terminal de télécommunication selon la revendication 3, dans lequel ladite information de client est insérée dans l'entête d'option hop-by-hop desdits paquets.

5. Routeur appartenant à un réseau de télécommunication, possédant des moyens pour recevoir des flux de paquets de données, **caractérisé en ce qu'**il dispose de moyens pour déterminer si ledit flux correspond à une norme de téléphonie mobile, à partir d'une information de client insérée au sein dudit flux, et des moyens pour mettre en oeuvre des mécanismes d'assurance de qualité de service, en fonction de cette détermination.

6. Routeur selon la revendication précédente, dans lequel il est routeur d'accès audit réseau de télécommunication.

7. Routeur selon l'une des revendications 5 ou 6, dans lequel lesdits mécanismes d'assurance de qualité de service dépendent d'autres informations sur le client, contenues dans ledit flux.

8. Routeur selon l'une des revendications 5 ou 6, possédant de surcroît de moyens pour notifier un serveur de facturation, en indiquant si ledit flux correspond à une norme de téléphonie mobile.

## Patentansprüche

1. Telekommunikationsendgerät (Tᵤ), das über Vorrichtungen zur Übermittlung eines Datenpaketflusses (fᵤ) an einen Access-Router (R) in einem Telekommunikationsnetz (N) verfügt, **dadurch gekennzeichnet, dass** es über eine Vorrichtung verfügt, um eine Kundeninformation in den genannten Datenfluss einzufügen, in der angegeben wird, ob der genannte Datenfluss einer Mobiltelefonie-Norm entspricht.

2. Telekommunikationsendgerät gemäß dem vorgenannten Anspruch, wobei es sich bei der genannten Norm um die Norm UMTS (Universal Mobile Telecommunication System) handelt.

3. Telekommunikationsendgerät gemäß einem der Ansprüche 1 oder 2, in dem die genannte Kundeninformation in einen Header der genannten Pakete eingefügt wird.

4. Telekommunikationsendgerät gemäß Anspruch 3, in dem die genannte Kundeninformation in den Header der Hop-by-Hop-Option der genannten Pakete eingefügt wird,

5. Zu einem Telekommunikationsnetz gehörender Router, der über Vorrichtungen verfügt, um Datenpaketflüsse zu empfangen, **dadurch gekennzeichnet, dass** er über Vorrichtungen verfügt, um festzustellen, ob der genannte Datenfluss einer Mobiltelefonie-Norm entspricht, und zwar auf der Grundlage der Kundeninformation, die in den genannten Datenfluss eingefügt wurde, sowie über Vorrichtungen zur Umsetzung von Mechanismen zur Sicherstellung der Dienstgüte in Abhängigkeit von dieser Feststellung.

6. Router gemäß dem vorgenannten Anspruch, wobei es sich um den Access-Router zu dem genannten Telekommunikationsnetz handelt.

7. Router gemäß einem der Ansprüche 5 oder 6, wobei die genannten Mechanismen zur Sicherstellung der Dienstgüte von anderen Informationen über den Kunden, die in dem genannten Datenfluss enthalten sind, abhängen.

8. Router gemäß einem der Ansprüche 5 oder 6, der außerdem über Vorrichtungen verfügt, um Informationen an einen Fakturierungsserver zu liefern, die angeben, ob der genannte Datenfluss einer Mobiltelefonie-Norm entspricht.

## Claims

1. Telecommunication terminal (Tᵤ) comprising means for transmitting a stream (fᵤ) of packets of data to an access router (R) to a telecommunication network (N), **characterized in that** it comprises means for inserting client information into said stream indicating if said stream corresponds to a mobile telephone standard.

2. Telecommunication terminal according to the preceding claim, wherein said standard is the Universal Mobile Telecommunication System (UMTS) standard.

3. Telecommunication terminal according to either claim 1 or claim 2, wherein said client information is inserted into a header of said packets.

4. Telecommunication terminal according to claim 3, wherein said client information is inserted into a hop-by-hop option header of said packets.

5. Router belonging to a telecommunication network, comprising means for receiving streams of packets of data, **characterized in that** it comprises means for determining if said stream corresponds to a mobile telephone standard from client information inserted in said stream and means for implementing quality of service assurance mechanisms as a function of what is determined in this way.

6. Router according to the preceding claim, taking the form of an access router to said telecommunication network.

7. Router according to either claim 5 or claim 6. wherein said quality of service assurance mechanisms depend on other information on the client contained in said stream.

8. Router according to either claim 5 or claim 6, additionally comprising means for notifying a billing server, indicating if said stream corresponds to a mobile telephone standard.
